# EUROPEAN PATENT APPLICATION

(11) **EP 3 300 390 A1**
(43) Date of publication of application: **28.03.2018**
(21) Application number: 16190753.0
(22) Date of filing: 27.09.2016
(51) Int. Cl.: H04R 7/02, H04R 7/04, H04R 7/06, H04R 7/10, H04R 7/12, H04R 9/02, H04R 9/06, H04R 9/10

(54) **DYNAMIC LOUDSPEAKER DRIVER, LOUDSPEAKER AND MOBILE DEVICE COMPRISING A LOUDSPEAKER**

(71) Applicant: Sound Solutions International Co., Ltd., Beijing 100176 (CN)
(72) Inventor: OTTO, Gustav, 1160 Vienna (AT); REINING, Friedrich, 1160 Vienna (AT); WOHLGENANNT, Michael, 1110 Vienna (AT)
(74) Representative: Burger, Hannes

(57) **Abstract**

The invention relates to a dynamic loudspeaker driver (42) which comprises a magnet-system (42), a membrane and a voice coil (45). The membrane comprises a semi-rigid diaphragm (43) and a flexible annulus (44) surrounding the diaphragm (43). The diaphragm (43) is movably mounted with respect to the magnet-system (42) by means of the annulus (44) and comprises a substrate (50) which comprises a first surface (51) and a second surface (52) being opposite to the first surface (51), a first layer (61) attached to and continuously covering the first surface (51), and a second layer (62) attached to and covering the second surface (52). The second layer (62) comprises a plurality of holes (63) having a predefined pattern. The voice coil (45) is attached to the diaphragm (43) and is operatively coupled with the magnet-system (42).

## Description

The invention relates to a dynamic loudspeaker driver, to a loudspeaker comprising the dynamic loudspeaker driver and to a mobile device, such as a mobile phone, comprising the loudspeaker.

A dynamic loudspeaker driver usually comprises a magnet system, a diaphragm movably mounted with respect to the magnet system, and a voice coil attached to the diaphragm. The magnet system comprises a magnet and the voice coil is operatively coupled with the magnet. Usually, a loudspeaker comprises an enclosure and at least one dynamic loudspeaker driver mounted in the enclosure.

When operating, an electric signal is applied to the voice coil, for instance, by an amplifier. Then, the diaphragm moves with respect to the magnet system and with respect to the enclosure in response to the electric signal, resulting in moving air. A soudpressure level of the loudspeaker depends on the air moved by the diaphragm.

When moving, the diaphragm is subjected to air pressure of the ambient air and the air within the enclosure, forming a load for the moving diaphragm. Since the diaphragm is not absolutely stiff, this pressure results in deforming the diaphragm, potentially reducing the sound quality of the loudspeaker.

It is an object of the present invention to provide a dynamic loudspeaker driver with an improved diaphragm.

Another object of the invention is to provide an improved loudspeaker and a further object of the invention is to provide an improved mobile device, for instance, a mobile phone.

The first object of the invention is achieved by means of a dynamic loudspeaker driver comprising a magnet-system; a membrane which comprises a semi-rigid diaphragm and a flexible annulus surrounding the diaphragm, the diaphragm being movably mounted with respect to the magnet-system by means of the annulus and comprising a substrate which comprises a first surface and a second surface being opposite to the first surface, a first layer attached to and continuously covering the first surface, and a second layer attached to and covering the second surface, the second layer comprising a plurality of holes having a predefined pattern; and a voice coil attached to the diaphragm and operatively coupled with the magnet-system.

The further objects of the invention are achieved by means of a loudspeaker comprising an enclosure and the dynamic loudspeaker driver mounted in the enclosure, and a mobile device comprising this loudspeaker. The mobile device may, for instance, be a mobile phone.

The dynamic loudspeaker driver comprises the membrane. The membrane comprises the diaphragm which is semi-rigid and which is movably mounted with respect to the magnet-system by means of the annulus. When mounted in the enclosure, then the diaphragm is also movable with respect to the enclosure. The enclosure is preferably a closed enclosure.

The annulus may, for instance, be attached directly to the magnet system. The dynamic loudspeaker driver may comprise a basket. Then, the magnet-system is preferably attached to the basket and the flexible annulus is attached to the basket.

When mounted in the enclosure, the membrane provides a barrier between the air of the enclosure and the ambient air of the loudspeaker. When operating, an electric signal is applied to the voice coil, for instance, by an amplifier. Then, the voice coil and thus the diaphragm moves with respect to the magnet-system and with respect to the enclosure in response to the electric signal, resulting in moving air.

The diaphragm is movably mounted with respect to the magnet-system by means of the annulus. A further purpose of the annulus may be, if there is no electric signal applied to the voice coil, to move the diaphragm to a centered position relative to the magnet-system.

The diaphragm comprises the substrate and the first and second layers are attached to the substrate. The diaphragm may in particular be a flat diaphragm. Then, *inter alia,* the second layer has a flat surface. The flat diaphragm may, for instance, be a flat plate.

The flat diaphragm may be between 80µm and 320µm thick, preferably about 120µm thick.

The dynamic loudspeaker driver may be relatively little and is preferably meant for a mobile device. In particular, the flat surface may have an area less than 2cm². Particularly this area may be between 0.5cm² and 1.7cm². Preferably, the area of the flat surface may be around 1.0cm²_{.}

The diaphragm and the flat surface may, for instance, be circular, oval, or rectangular.

The substrate may, for instance, be made from a foamed plastics. The first and second layers may be made from aluminum.

The plurality of holes may be a plurality of slit-shaped holes. The slit-shaped holes may have a width of less than 100 µm.

The plurality of holes may be applied to the second layer by means of laser cutting.

The diaphragm comprises the substrate and the first and second layers. The first layer is attached to the first surface of the substrate and covers the first surface of the substrate continuously. The first layer is, thus, a continuous layer.

The second layer is attached to and covers the second surface of the substrate. The second layer, however, comprises the plurality of holes having a predefined pattern. Due to the plurality of holes, the behavior of the diaphragm when moving and due to the pressure subjected to the diaphragm can be influenced, potentially improving the sound quality of the loudspeaker. The plurality of holes may be applied in an online tuning process or in a design process, for instance, to define the pattern of the plurality of holes for, for instance, a punching tool used for applying the holes to the second layer.

When the flat diaphragm moves away from the enclosure, then the pressure of the ambient air of the enclosure acts as a load, and when the flat diaphragm moves towards the enclosure, then the pressure of the air within the enclosure acts also as a load. Since the flat diaphragm is not absolutely stiff, and since for a given excursion the pressure of the ambient air and of the air within the enclosure differ, a flat diaphragm having a substrate and two continuous layers attached to the substrate will likely bend differently when moving towards or moving away from the enclosure.

According to a preferred embodiment of a flat diaphragm, the pattern of the plurality of holes may be chosen such that the flat diaphragm bends at least similar when moving towards or moving away from the enclosure. In particular, the flat diaphragm may have an asymmetric stiffness depending on the direction of its movement.

According to an embodiment of the dynamic loudspeaker driver, the second surface of the diaphragm faces towards the magnet-system. Then, the plurality of holes are applied to the layer facing towards the enclosure. Particularly, when the enclosure is a closed enclosure and the diaphragm is a flat diaphragm, then the pressure applied to the flat diaphragm by the air within the enclosure is greater than the pressure applied by the ambient pressure. By applying the plurality of holes to the layer facing towards the enclosure and choosing an appropriate pattern dependent on the enclosure and the properties of the flat diaphragm, it is possible to influence the stiffness of the flat diaphragm in such a way that the flat diaphragm bends at least to a similar degree when moving towards or moving away from the enclosure, potentially improving the sound quality of the loudspeaker.

The flat surface may have a center and at least two of the holes of the plurality of holes may be arranged symmetrically with respect to the center of the flat surface.

At least some of the holes of the plurality of holes or all holes of the plurality of holes may be arranged along the perimeter of a two dimensional shape. The two dimensional shape may, for instance, be an ellipse, a rectangle or preferably a circle. Preferably, the holes are arranged along the perimeter symmetrical with respect to the center. In particular, if the two dimensional shape is a circle, the holes may be equidistant spaced apart.

The holes of the plurality of holes may be arranged along the perimeters of a plurality of non-intersecting two dimensional shapes. Preferably, the holes of the plurality of holes may be arranged along the perimeters of a plurality of two dimensional shapes arranged concentrically with respect to a common center. The two dimensional shapes may all be of the same type, for instance, may all be circles. The two dimensional shapes, however, may be of different types. The two dimensional shapes may be at least one of an ellipse, a rectangle or preferably a circle.

The flat surface has a center which may be the common center such that the at least two dimensional shapes may be arranged concentrically with respect to the center of the flat surface.

Preferably, the holes may be symmetrical with respect to the common center. In particular, if the two dimensional shape is a circle, then the holes may be equidistant spaced apart along the perimeter of that circle.

Preferably, the holes may be arranged along the relevant perimeters such that holes of two subsequent two dimensional shapes do not overlap or at least only partially overlap in radial direction with respect to the common center. In particular, when the holes are arranged in the non-overlapping manner, then the flat diaphragm may be designed such that it has a linear stiffness in radial direction.

If the plurality of holes is arranged along the perimeters of concentrically arranged circles, then the two dimensional shapes may comprise an inner circle having an inner radius and at least two outer circles having respective outer radii arranged concentrically with respect to the common center. Then, beginning from the inner circle, the radius of a subsequent outer circle may increase by a constant value. Alternatively or in addition, beginning from the inner circle, the number of holes may double with each subsequent outer circle. The number of holes per cycle may be the same.

### BRIEF DESCRIPTION OF THE DRAWINGS

FIG. 1 is a top view of a mobile phone;
FIG. 2 and FIG. 3 are each a loudspeaker of the mobile phone;
FIG. 4 is a side and sectional view of a dynamic loudspeaker driver of the loudspeaker;
FIG. 5 is a top view of the dynamic loudspeaker driver;
FIG. 6 is a diaphragm of the dynamic loudspeaker driver;
FIG. 7 is a substrate of the diaphragm;
FIG. 8 is a top view of a layer of the diaphragm.

### DESCRIPTION OF THE PREFERRED EMBODIMENT

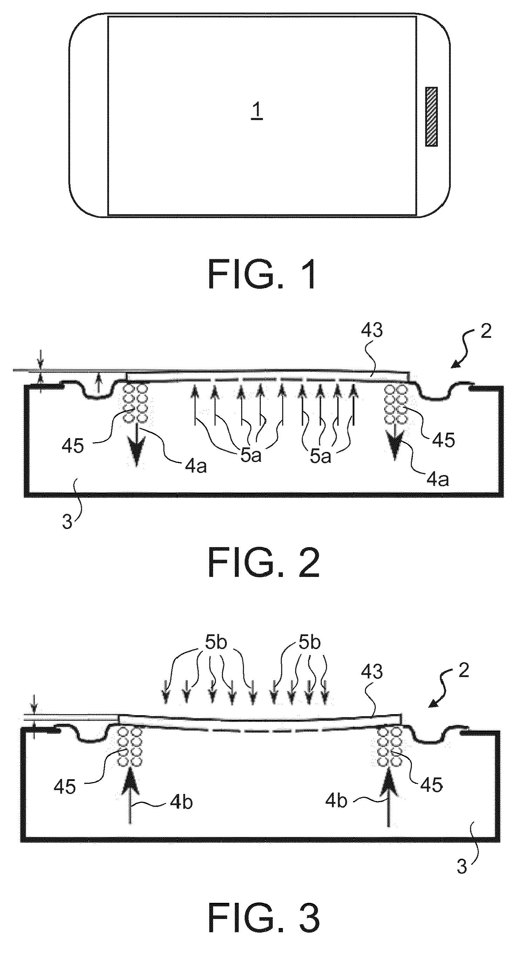

FIG. 1 shows a mobile phone 1 as an example of a mobile device. The mobile phone 1 comprises a microphone, a wireless sender-receiver unit and a loudspeaker 2 schematically shown as side and sectional views in Figures 2 and 3.

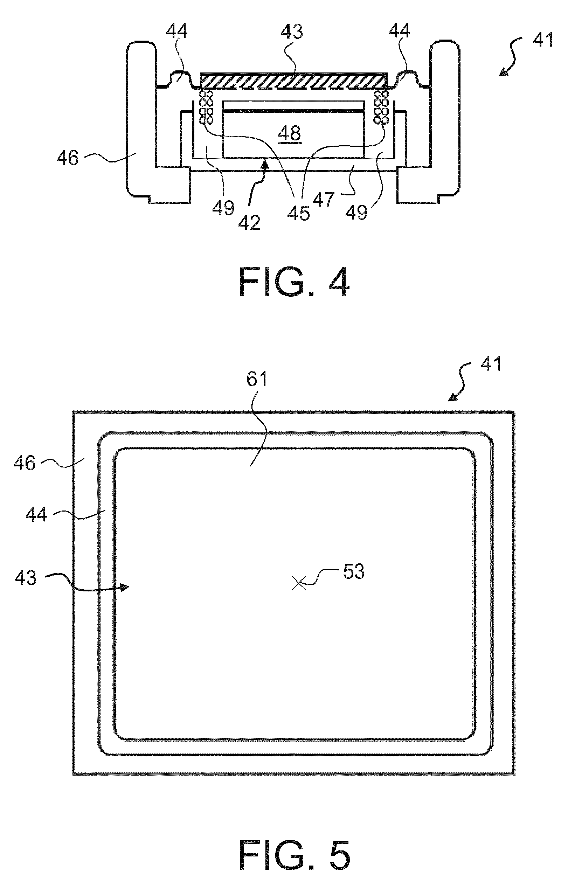

The loudspeaker 2 comprises an enclosure 3 and a dynamic loudspeaker driver 41 shown as a side and sectional view in Fig. 4. Fig. 5 shows a top view of the loudspeaker 2. The enclosure 3 is in particular a sealed or closed enclosure 3 and the dynamic loudspeaker driver 41 is mounted in the enclosure 3.

The dynamic loudspeaker driver 41 comprises a magnet-system 42, a membrane, and a voice coil 45. The membrane comprises a semi-rigid diaphragm 43 and a flexible annulus 44 surrounding the diaphragm 43. The voice-coil 45 is attached to the diaphragm 43 by means, for instance, of a glue. The diaphragm 43 is movably mounted with respect to the magnet-system 42 by means of the annulus 44.

The dynamic loudspeaker driver 41 further comprises a basket 46. The annulus 44 is attached to the basket 46.

The magnet-system 42 comprises a pot 47 and a magnet 48. The pot 47 and the magnet 48 form an air gap 49. The voice coil 45 is located within the air gap 49 and is operatively coupled with the magnet 48.

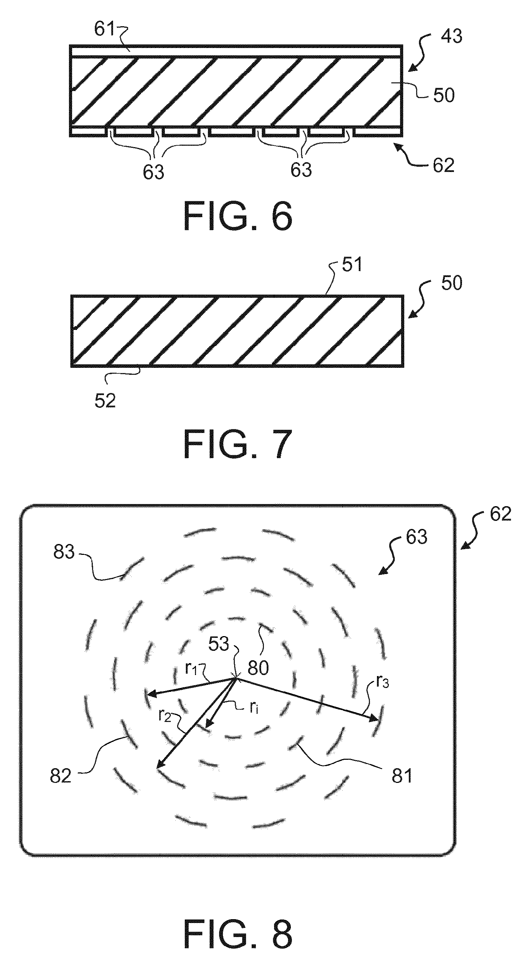

A side view of the diaphragm 43 is shown in Fig. 6.

The diaphragm 43 may have a circular, an oval shape or, as shown in Fig. 5 a rectangular shape.

The diaphragm 43 comprises a substrate 50 shown as a side view in Fig. 7, a first layer 61 and a second layer 62. The substrate 50 may be made from plastics, in particular made from a foamed plastics.

The first and second layers 61, 62 may be made from metal, in particular from aluminum.

The substrate 50 comprises a first surface 51 and a second surface 52. The first layer 61 is attached to and covers the first surface 61. The second layer 62 is attached to and covers the second surface 62.

In the present embodiment, the second surface 52 of the substrate 50 faces towards the magnet-system 42 and the first surface 51 faces away from the magnet-system 42.

The first and second layers 61, 62 may, for instance, be 8 µm thin.

The first layer 61 is a continuous layer covering continuously the entire first surface 51.

The diaphragm 43 is in particular a flat diaphragm 43. As a result, the second layer 62 has a flat surface. Preferably, the flat surface has an area of less than 2cm², particularly between 0.5 cm² and 1.7cm². Preferably, the flat surface has an area of around 1.0cm². The flat diaphragm 43 may be between 80µm and 320µm thick, preferably about 120µm thick. A top view of the second layer 62 is shown in Fig. 8.

The second layer 62 is an interrupted layer which is interrupted by a plurality of holes 63 having a predefined pattern. The plurality of holes 63 may be a plurality of slit-shaped holes. The slit-shaped holes may have a width of less than 100µm.

When operating, an electric signal is applied to the voice coil 45, for instance, by an amplifier. Then, the diaphragm 43 moves with respect to the magnet system 42 in response to the electric signal, resulting in moving air.

Fig. 2 illustrates a scenario when the electric signal forces the diaphragm 43 to move towards the enclosure 3. This is indicated by arrows 4a. Then, the air within the enclosure 3 applies a pressure or force to the second surface 52 and to the second layer 62. This is indicated by arrows 5 a.

Fig. 3 illustrates a scenario when the electric signal forces the diaphragm 43 to move away from the enclosure 3. This is indicated by arrows 4b. Then, the ambient air applies a pressure or force to the first surface 51 and to the first layer 61. This is indicated by arrows 5b.

Since the enclosure 3 is a closed enclosure 3, the pressure applied by the ambient air is less than the pressure applied by the air within the enclosure 3. This is indicated by the different lengths of the arrows 5a, 5b.

Particularly, the pressure applied to the diaphragm 43 by the air within the enclosure 3 is greater than the pressure applied by the ambient pressure. By applying the plurality of holes 63 to the second layer 62 and choosing an appropriate pattern dependent on the enclosure 3 and the properties of the diaphragm 43, it is possible to influence the stiffness of the diaphragm 43 in such a way that the diaphragm 43 bends at least to a similar degree when moving towards or moving away from the enclosure 3.

In the present embodiment, the flat surface has a center 53 and at least two of the holes of the plurality of holes 63 are arranged symmetrically with respect to the center 53 of the flat surface.

In the present embodiment, the holes 63 are arranged along the perimeters of two dimensional shapes. The two dimensional shapes may, for instance, be ellipses, rectangles or, as shown in Fig. 8 circles.

In the embodiment shown in Fig. 8, the circles are non-intersecting and specifically concentric with respect to the center 53 of the flat surface.

Specifically, the circles comprise an inner circle 80 having an inner radius rᵢ, a first outer circle 81 having a first outer radius r₁, a second outer circle 82 having a second outer radius r₂, and a third outer circle 83 having a third outer radius r₃. The first outer radius r₁ is greater than the inner radius rᵢ, the second outer radius r₂ is greater than the first outer radius r₁, and the third outer radius r₃ is greater than the second outer radius r₂.

Specifically, beginning from the inner circle 80, the radius of a subsequent outer circles 81-83 increases by a constant value.

Specifically, the number of holes 63 per circle 80-83 is the same.

Specifically, the holes 63 are equidistant spaced apart along the perimeter of each circle 80-83.

Specifically, the holes 63 are arranged along the relevant perimeters such that holes 63 of two subsequent circles 80-83 do not overlap with respect to the center 53.

Although modifications and changes may be suggested by those skilled in the art, it is the intention of the invention to embody within the patent warranted hereon all changes and modifications as reasonably and properly come within the scope of his contribution to the art.

## Claims

1. A dynamic loudspeaker driver, comprising
a magnet-system (42);
a membrane which comprises a semi-rigid diaphragm (43) and a flexible annulus (44) surrounding the diaphragm (43), the diaphragm (43) being movably mounted with respect to the magnet-system (42) by means of the annulus (44) and comprising a substrate (50) which comprises a first surface (51) and a second surface (52) being opposite to the first surface (51), a first layer (61) attached to and continuously covering the first surface (51), and a second layer (62) attached to and covering the second surface (52), the second layer (62) comprising a plurality of holes (63) having a predefined pattern; and
a voice coil (45) attached to the diaphragm (43) and operatively coupled with the magnet-system (42).

2. The dynamic loudspeaker driver of claim 1, wherein the second surface (52) of the diaphragm (43) faces towards the magnet-system (42).

3. The dynamic loudspeaker driver of claim 1 or 2, wherein the diaphragm (43) is a flat diaphragm and the second layer (62) has a flat surface, and in particular at least one of the flat surface has an area less than 2cm², is circular, is oval, or is rectangular.

4. The dynamic loudspeaker driver of claim 3, wherein the flat surface has a center (53) and at least two of the holes of the plurality of holes (63) are arranged symmetrically with respect to the center (53) of the flat surface, and/or wherein at least some of the holes of the plurality of holes (63) are arranged along the perimeter of a two dimensional shape.

5. The dynamic loudspeaker driver of claim 3 or 4, wherein the holes of the plurality of holes (63) are arranged along the perimeters of a plurality of non-intersecting two dimensional shapes, in particular along the perimeters of a plurality of two dimensional shapes arranged concentrically with respect to a common center.

6. The dynamic loudspeaker driver of claim 4 or 5, wherein the two dimensional shapes are taken from a group consisting of a circle (80-83), an ellipse and a rectangle.

7. The dynamic loudspeaker driver of any of claims 4 to 6, wherein the flat surface has a center (53) which is the common center such that the at least two dimensional shapes are arranged concentrically with respect to the center (53) of the flat surface.

8. The dynamic loudspeaker driver of any of claims 4 to 7, wherein the holes (63) are arranged along the relevant perimeters such that holes of two subsequent two dimensional shapes do not overlap or at least only partially overlap in radial direction with respect to the common center.

9. The dynamic loudspeaker driver of any of claims 1 to 8, wherein the holes (63) are symmetrical with respect to the common center.

10. The dynamic loudspeaker driver of any of claims 4 to 9, wherein the two dimensional shapes comprise an inner circle (80) having an inner radius (rᵢ) and at least two outer circles (81-83) having respective outer radii (r₁-r₃) arranged concentrically with respect to the common center.

11. The dynamic loudspeaker driver of claim 10, wherein, beginning from the inner circle (80), the radius of a subsequent outer circle (81-83) increases by a constant value.

12. The dynamic loudspeaker of any of claims 1 to 11, wherein the plurality of holes (63) is a plurality of slit-shaped holes, and in particular the slit-shaped holes have a width of less than 100µm.

13. The dynamic loudspeaker driver of any of claims 1 to 12, wherein at least one of the substrate (50) is made from a foamed plastics, or the first and second layers (51, 52) are made from aluminum, and/or wherein the plurality of holes (63) is applied to the second layer (53) by means of laser cutting.

14. A loudspeaker, comprising an enclosure (3) and the dynamic loudspeaker driver (41) of any of claims 1 to 13 mounted in the enclosure.

15. A mobile device comprising the loudspeaker (2) of claim 14.
